# EUROPEAN PATENT APPLICATION

(11) **EP 0 971 308 A1**
(43) Date of publication of application: **12.01.2000**
(21) Application number: 98112445.6
(22) Date of filing: 06.07.1998
(51) Int. Cl.: G06K 11/18, G05B 19/42, G01B 21/04

(54) **Three-dimensional input device and method for digitising objects**

(71) Applicant: Riedel, Thomas, Dr., 8400 Winterthur (CH)
(72) Inventor: Riedel, Thomas, Dr., 8400 Winterthur (CH)
(74) Representative: Blum, Rudolf Emil Ernst

(57) **Abstract**

The input device comprises six position sensors (10a, 10b, 11a, 11b, 12a, 12b) and a distance sensor (9) arranged in a pointer (1). The position sensors are adapted for determining the position and orientation of the pointer (1) and the distance sensor (9) is used for detecting the presence of an object. The device can e.g. be used for digitising three-dimensional surfaces.

## Description

The invention relates to a three-dimensional input device and a method for digitising objects according to the preamble of the independent claims.

A device of this type is described in US 4 839 838. It comprises detectors for measuring its position (x,y,z) as well as its orientation (roll, pitch, yaw). It can be used for digitising objects by attaching a pointer to it, contacting the object with the pointer at various points, and, for each point, actuating a switch for instructing a computer to record the corresponding coordinates. This procedure is, however, quite cumbersome.

The problem to be solved by the present invention is therefore to provide a device and method of the type mentioned above that make digitising objects easier. This problem is solved by the method and device according to the independent claims.

The device according to the invention is provided with a positional detector for detecting the position of the digitisation point and with a distance sensor for sensing the proximity of the object to be digitised. The distance sensor can therefore detect the proximity of the object automatically, which obviates the need to actuate a button for triggering the measurement after positioning the pointer.

Preferably, the distance sensor is a non-contacting distance sensor, such as an optical or acoustic distance sensor.

For simplifying its application, the pointer can comprise a rod-like housing with the distance sensor arranged at an end thereof.

For improving the accuracy of the measured data, the device can further be provided with a reference unit for defining a reference coordinate system. The position and/or orientation of the reference unit are measured and subtracted from those of the pointer. This allows an accurate measurement of the pointer position even when using the device on a moving vehicle, such as a train or airplane.

The signal from the distance sensor can be used for detecting when the distance between the pointer and the object is equal to or below a given value and, if yes, the measurement is carried out automatically. The signal from the distance sensor can also be used for correcting the data measured by the position detector.

Further preferred embodiments and advantages of the invention are listed in the dependent claims and the following description, which description refers to the appended figures, wherein
Fig. 1 shows the basic components of a preferred embodiment of the invention, and
Fig. 2 is a block diagram of the embodiment of Fig. 1.

The embodiment shown in the figures comprises a pointer 1 and a control unit 2 connected by a cable 3. Alternatively, a radio transmitter 4 can be used for linking pointer 1 and control unit 2. Control unit 2 is provided with an interface for connecting it to a computer 6.

Pointer 1 is a hand-held device that can be moved around in space. It has a rod-like housing 7 with a tip 8.

A distance sensor 9 is arranged at tip 8 of pointer 1. It is adapted to detect the distance from tip 8 to an object located in front of it and can e.g. be based on ultrasonic echo techniques.

A total of six piezoelectric vibration gyroscope sensors 10a, 10b, 11a, 11b, 12a, 12b are arranged in pairs along the axis of pointer 1 in points 10, 11 and 12. Each such sensor is capable of measuring the acceleration along one of the axes x, y and z. In the most general case, six such sensors are required for measuring the position as well as orientation of the pointer. In a case where pointer 1 is rotationally symmetric, i.e. where the rotational position of the pointer along its longitudinal axis is irrelevant, at least five sensors are required.

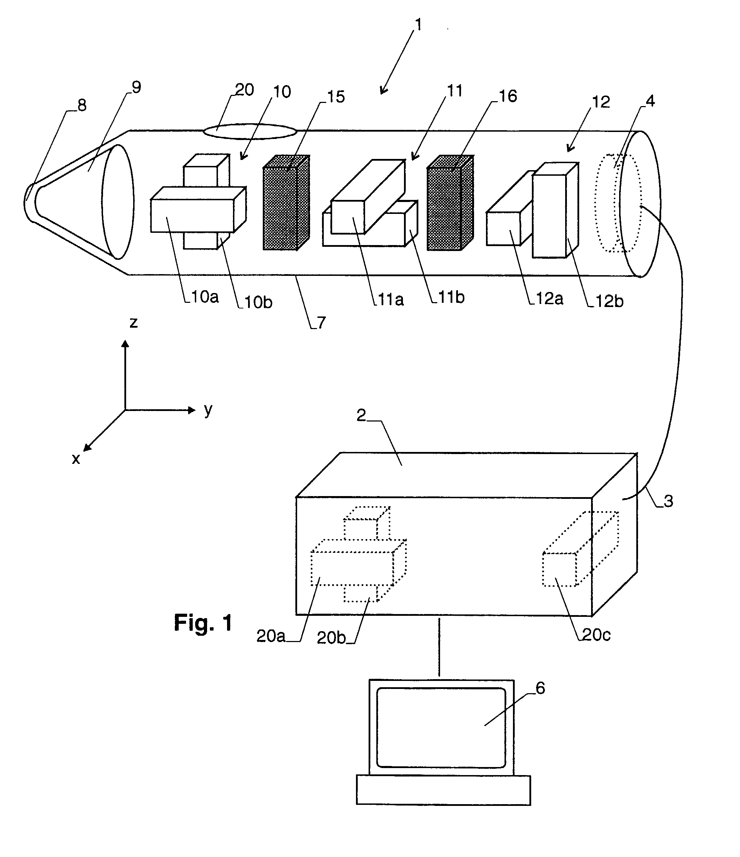

Suited sensors of this type are known to a person skilled in the art. In the present embodiment, sensors ENC-05EA and ENC-05EB by Murata are used. These sensors are offered in pairs of different operating frequency for avoiding interference problems. Therefore, a pair-wise arrangement of orthogonal sensors is used in the pointer of Fig. 1.

In the present embodiment, pointer 1 is further equipped with a rechargeable battery 15 and control electronics 16. The control electronics 16 collect the data from the sensors 9, 10a, 10b, 11a, 11b, 12a, 12b and an optional button 20 and transmit them through cable 3 or radio interface 4 to control unit 2.

Control unit 2 is equipped with three pairs of double integrators 18, each of which is calculating the second integral of one of the sensors 10a, 10b, 11a, 11b, 12a or 12b, respectively, thereby calculating the absolute positions y₁, z₁, x₂, y₂ and x₃, z₃ at points 10, 11 and 12 of the pointer. A reset input is provided for zeroing the double integrators. Using these six coordinates and the known (previously calibrated) geometry of pointer 1, it is now possible to calculate digitisation point, i.e. the coordinates x_{d}, y_{d} and z_{d} of tip 8. Optionally, the signal d of distance sensor 9 can be used to correct the coordinates x_{d}, y_{d} and z_{d} for representing a point on the surface of the object to be measured.

The coordinates x_{d}, y_{d} and z_{d}, the signal d from distance sensor 9 and the state f of button 20 are fed to a transmitter interface 21, from where they are transmitted to computer 6.

In a preferred application, the device of Fig. 1 is used for digitising the three-dimensional surface of an object. For this purpose, tip 9 of pointer 1 is brought close to the object. Whenever distance sensor 9 indicates that the object is close (e.g. closer than a threshold value of 1 mm), a measurement is triggered, i.e. the position of tip 8 is recorded. In this way it is possible to record individual points on the object or, if tip 9 is moved along the object, continuous (or substantially continuous) curves along the surface of the object.

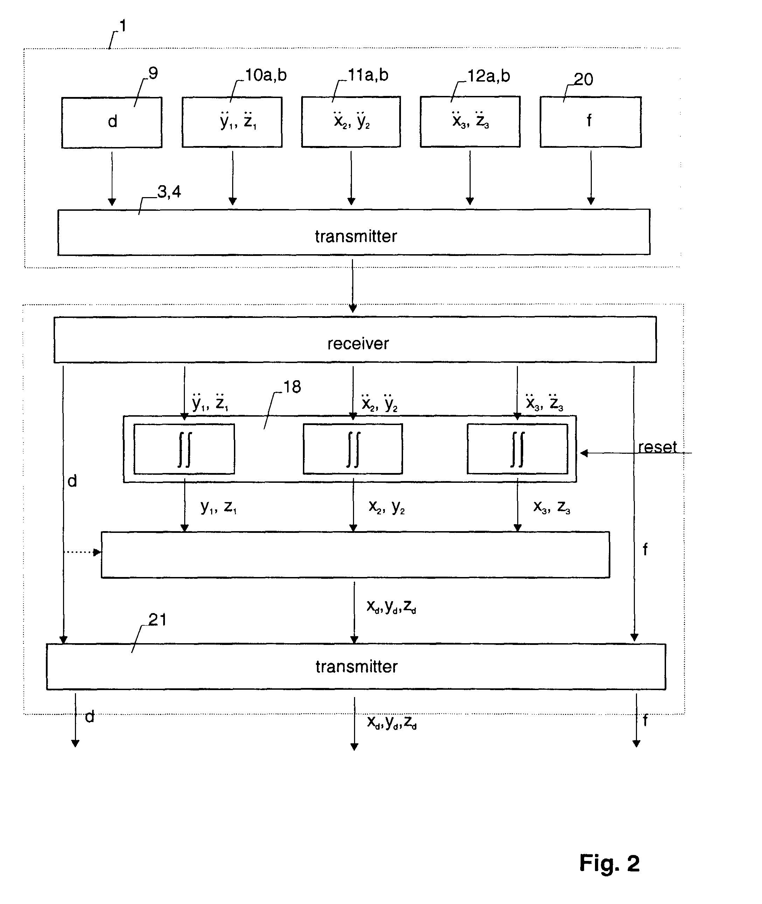

The device of Figs. 1 and 2 is only one possible embodiment of the invention and it can be varied in various aspects without deviating from the present concept.

For instance, distance sensor 9 could be replaced by a spring-biased pin protruding from tip 8, which, when pushed against the object, actuates a switch within pointer 1. A contact-free detector is preferred, however.

In some applications, e.g. when using the device in a moving vehicle, sensors 10a, 10b, 11a, 11b, 12a, 12b may not provide accurate results because the "reference system" of the object to be digitised is moving. In such cases, at least three reference detectors can be provided for measuring the position and/or orientation of a reference unit resting in the reference system. This reference unit may e.g. be control unit 2 and the reference detectors can be arranged therein as indicated under 20a, b, c. The position and/or orientation data obtained in this way can then be subtracted from the data obtained from the sensors 10a, 10b, 11a, llb, 12a, 12b for correction.

In the embodiment of Fig. 2, only the tip coordinates x_{d}, y_{d} and z_{d} are passed along to computer 6. However, it is also possible to pass additional data to the computer, e.g. the coordinates y₁, z₁, x₂, y₂ and x₃, z₃ or the direction of the longitudinal axis of pointer 1, from which computer 6 can calculate position as well as orientation of the pointer, in which case pointer 1 can e.g. be used as a joystick with six degrees of freedom.

The device shown here can also be used for conventional digitising purposes, such as digitising two-dimensional objects or recording of handwriting.

In the present embodiment, piezoelectric vibration gyroscopes have been used as position sensors. It is, however, also possible to use other techniques, such as ultrasonic, radio or optical triangulation. The sensors used in the present embodiment are preferred, however, because they can be fully integrated into pointer 1.

## Claims

1. A three dimensional input device comprising a pointer (1) and a position detector (2, 10a, 10b, 11a, 11b, 12a, 12b) for detecting a digitisation position (x_{d}, y_{d,} z_{d}) in space characterised by a proximity sensor (9) for sensing the proximity of an object to be digitised and for releasing a measurement.

2. The device of claim 1 wherein said distance sensor (9) is a non-contacting distance sensor, preferably an optical or acoustical distance sensor.

3. The device of one of the preceding claims wherein said pointer (1) comprises a rod-like housing (7), wherein said distance sensor (9) is arranged at an end (8) of said housing (7).

4. The device of one of the preceding claims, wherein said position detector is arranged in said pointer (1).

5. The device of one of the preceding claims, further comprising a reference unit (2) for defining a reference coordinate system and a reference detector (20a, 20b, 20c) for detecting the position and/or orientation of said reference unit, wherein said pointer (1) is movable in respect to said reference unit (2).

6. The device of one of the preceding claims, further comprising a radio emitter (4) for transmitting data from said position detector (10a, 10b, 11a, 11b, 12a, 12b) and said distance sensor (9).

7. The device of one of the preceding claims, wherein said position detector (2, 10a, 10b, 11a, llb, 12a, 12b) is adapted to measure a position and orientation of said input device and to derive said digitisation position (x_{d}, y_{d,} z_{d}) therefrom.

8. A method for digitising the surface of an object comprising the steps of
approaching a tip (8) of a pointer (1) to said object
automatically sensing a distance between said tip and said object and
automatically measuring the three dimensional position of a point (x_{d}, y_{d,} z_{d}) on said object when the distance between said tip and said surface is equal to or below a given value.

9. The method of claim 8 comprising the step of using said distance between said tip and said object for correcting said coordinates.

10. The method of one of the claims 8 - 9, wherein said tip (1) is moved along said surface for continuously recording a curve on said surface.

11. The method of one of the claims 8 - 10, comprising the step of measuring a position and orientation of said pointer (1) and of deriving said point (x_{d}, y_{d,} z_{d}) therefrom.
